# EUROPEAN PATENT APPLICATION

(11) **EP 3 267 177 A1**
(43) Date of publication of application: **10.01.2018**
(21) Application number: 16178537.3
(22) Date of filing: 08.07.2016
(51) Int. Cl.: G01N 3/46

(54) **METHOD FOR AUTOMATED SURFACE EVALUATION**

(71) Applicant: Anton Paar TriTec SA, 2034 Peseux (CH)
(72) Inventor: Coudert, Pierre-Jean, F-25370 Metabief (FR); Randall, Nicholas, CH-2000 Neuchâtel (CH); Favaro, Gregory, CH-1321 Arnex-sur-Orbe (CH); Bellaton, Bertrand, CH-2000 Neuchâtel (CH)
(74) Representative: e-Patent SA

(57) **Abstract**

Method of evaluating a performance of a surface of a material, the method comprising steps of:
- carrying out a scratch test on a surface of a sample (5) by means of a stylus (9) so as to form a scratch along a predetermined track (6), and measuring at least one parameter (Fn, Ft, Pd, Ae, Rd) relating to said scratch;
- subsequently, acquiring and storing a series of images (13) of at least a part of said scratch, each of said images (13) corresponding to a magnified part of said scratch;
- subsequently, synchronising said images (13) with the measurements of said at least one parameter (Fn, Ft, Pd, Ae, Rd) in function of displacement of said stylus (9) along said predetermined track (6)

According to the invention, a failure point (CP1; CP2) of the surface of the sample (5) is determined based on automatic image recognition carried out on said images (13).

## Description

### Technical field

The present invention relates to the field of evaluation of surfaces of materials, particularly but not exclusively to surfaces provided with a coating.

### Background art

It is commonly known to evaluate the surface properties of a material sample by means of a so-called scratch test. This test involves providing a prepared material specimen in a materials testing device, and scratching a stylus along the surface of the sample, typically under a linearly-increasing load applied substantially orthogonal to the surface of the sample. During this scratching, various parameters are measured, such as applied load, displacement parallel to the surface of the sample, displacement of the stylus into the surface of the sample, acoustic emissions, and tangential force applied to the stylus by the sample.

In a common ramped-load scratch test of a sample provided with a coating which is harder than the substrate, typically both the underlying substrate and the coating first deform elastically, then the substrate deforms plastically while the coating remains in its elastic regime, and then the coating will deform plastically and/or fracture, leading to spalling. During the second of these regimes, the adhesion of the coating to the substrate is an aspect that can be examined upon relaxation of the sample and of the coating after passage of the stylus.

These parameters are graphed, and various material properties such as bulk modulus, elastic modulus, coefficient of friction etc., can be directly determined from the various parameters. Furthermore, so called "critical failure points" at which a fracture (such as cracking, spalling or delamination of a coating occurs) can be determined based on changes in these parameters. For instance, when a hard surface coating starts to spall, the acoustic emissions can increase significantly. By looking at the various measured parameters at the critical points, useful information can be gathered about the behaviour of the sample.

Identification of the critical points by means of analysing the conventional parameters of acoustic emission and calculated coefficient of friction is difficult, and requires a skilled interpreter of the data.

The document EP 2 291 635 attempts to improve on this by determining the critical points corresponding to fracture points of the sample by identifying when at least one measured value of the tangential force applied between the stylus and the surface of the substrate as a result of the former being scratched along the latter under a normal load exceeds a threshold value.

However, whereas use of this parameter does improve the results over and above simply looking at acoustic emission and coefficient of friction, it still is not satisfactory, since it does not easily permit identification of the very start of coating separation in certain substrate-coating systems. Furthermore, a skilled interpreter of the data is often still required to identify failure points.

### Disclosure of the invention

An object of the invention is thus to improve on the above-mentioned methods of surface evaluation, and thereby to be able to automate detection of failure points.

To this end, the invention relates to a method of evaluating a performance of a surface of a material, as defined in claim 1. This method comprises firstly a step of carrying out a scratch test on a surface of a sample by means of a stylus so as to form a scratch along a predetermined track, and measuring at least one parameter relating to said scratch, such as normal force and/or penetration depth and/or acoustic emissions and/or tangential force.

Subsequently, a series of images of at least a part of said scratch are acquired and stored, for instance by means of a microscope camera integrated into a scratch test apparatus which is used to carry out the method. Each of these images corresponds to a magnified part of said scratch.

Subsequently, these images are synchronised of said images with the measurements of said at least one parameter in function of displacement of said stylus along said predetermined track.

According to the invention, a failure point (e.g. a critical failure point) of the surface of the sample is then determined based on automatic image recognition carried out on said images.

As a result, the need for a skilled technician who can manually interpret scratch test data is reduced or eliminated, and the automatically recognised failure point can easily then be cross-correlated with the corresponding measurement data.

Advantageously, said at least one parameter comprises the normal force applied by the stylus to the sample. More advantageously, the at least one parameter also comprises (as at least one subsequent parameter): acoustic emissions and/or penetration depth of the stylus into the surface of the sample and/or tangential force between the surface of the sample and the stylus and/or residual depth of said scratch. This latter requires a further "post-scan" measurement after performing the scratch.

Advantageously, said step of determining a failure point is carried out by means of a neural network. This neural network can have been previously trained to detect failure points based on inputting a plurality of datasets incorporating image data, corresponding parameter data, and manually identified failure points. This image data can comprise images focussed on the original surface of the sample (using a pre-scan surface profile measured before carrying out the scratch test as a basis for focussing the images), and/or multifocussed images focussed based on residual depth measurements.

Advantageously, said failure point is determined in combination with said at least one parameter, which provides more dimensions to the analysis, increasing its precision. Also, the approximate failure point can optionally be pre-determined by determining when said at least one parameter, or a function thereof such as a first differential or a departure from a projected value based on a projected trend, deviates from an expected magnitude value by at least a predetermined amount. As a result, the precision of the recognition process can be improved.

The invention also relates to a scratch test apparatus adapted to carry out the methods as described above. This apparatus may comprise a headstock and a sample holder displaceable one with respect to the other, a stylus supported by the headstock and arranged to be brought into contact with a surface of a sample supported on the sample holder, at least one sensor for recording at least one parameter of a scratch test, and a controller adapted to control said scratch test apparatus.

Finally, the invention relates to a computer program product directly loadable into the internal memory of a digital computer comprising software code portions for causing a scratch testing apparatus to perform the steps of any of the methods mentioned above when said product is run on a computer controlling said scratch test apparatus.

### Brief description of the drawings

The invention will be further explained in the context of the following figures, which illustrate:
- Figure 1: a schematic diagram of a scratch testing apparatus;
- Figure 2: a schematic flow diagram of a method according to the invention; and
- Figures 3-5: graphs of scratch test data illustrating the functioning of the method of the invention.

### Mode(s) for carrying out the invention

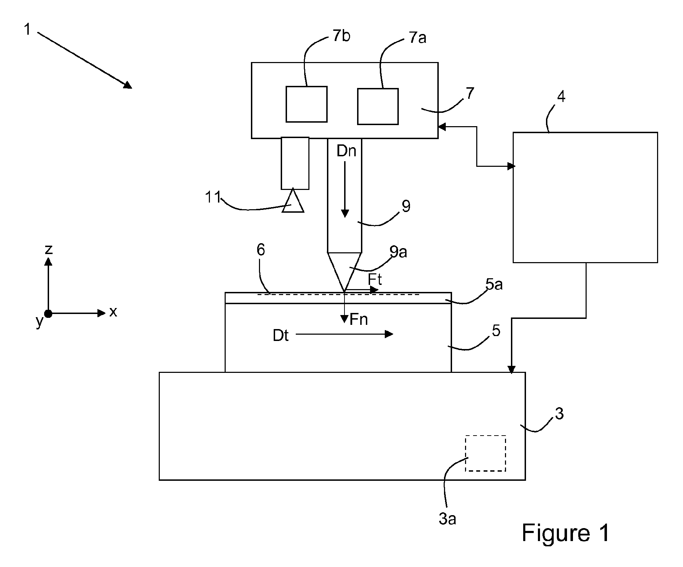

Figure 1 shows schematically a scratch testing apparatus 1. As is commonly known, this apparatus 1 comprises a sample holder 3 upon which a sample 5 can be fixed, e.g. by clamping, bolting or similar. Sample 5 may optionally comprise a coating 5a. Sample holder 3 is typically displaceable in at least one direction in the plane XY of the sample (the Y direction being into the page), and normally also perpendicular thereto, i.e. according to the Z direction, by means of suitable actuators (not illustrated) as generally known.

The apparatus 1 also comprises a headstock 7, supporting a stylus 9. A distal end of the stylus 9 comprises a tip 9a facing the sample holder 3 and hence equally facing the sample 5. The tip 9a may be of any know shape (e.g. conical, hemispherical, pyramidal...) and of any convenient material (e.g. steel, diamond, alumina...), depending on the material of the surface of the sample to be tested.

Headstock 7 comprises various actuators 7a and sensors 7b, for applying and measuring normal force Fn (in the Z direction), tangential force Ft (in at least one direction in the XY plane, if desired), and displacement Dn normal to the surface of the sample 5, as is generally known. Alternatively, or additionally, sensors 3a for one or more forces and/or displacements may be comprised within the sample holder 3 and/or within a structure (not illustrated) which supports this latter.

The stylus 9 can be displaced with respect to the sample 5 by means of any combination of moving sample holder 3 and/or the headstock 7 and/or moving the stylus 9 with respect to the headstock 5, as is generally known.

A controller 4 controls all displacements and actuators, and receives all measurements from the sensors 7b, as is generally known. Controller 4 may for instance be a dedicated control unit comprising a dedicated computer integrated therein, or may be a general purpose programmable computer adapted to control the scratch testing apparatus 1.

The scratch testing apparatus 1 also comprises a microscope camera 11, attached to the headstock 7 and adapted to take microscope images of parts of the scratch. Alternatively, the camera 11 may be provided on an independent module, although this presents greater difficulties in respect of aligning the camera with the scratch. The controller 4 is adapted to store a plurality of images taken by the camera, and to synchronise them with the measurement data provided by the sensors 7b, 3a, as is described in document EP 2065695, herein incorporated by reference in its entirety. This synchronisation is carried out in function of displacement of the tip 9a long said predetermined track.

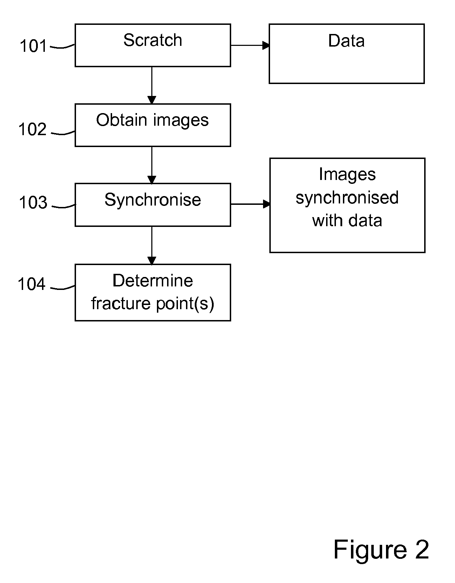

According to the present invention, the scratch testing apparatus is adapted to carry the method of figure 2.

This method incorporates the following steps.

After provision of a suitable scratch testing apparatus 1 and an appropriate sample 5 upon the sample holder 3 such that the upper face of the sample 5 is substantially situated in the XY plane, in step 101 a scratch test is carried out along a predetermined track 6 as is generally known. Prior to this scratch test, it is possible to carry out a so-called "pre-scan" may be carried out as described in EP 1092142, herein incorporated by reference in its entirety. Such a pre-scan involves tracking the tip 9a along at least part of said predetermined track 6 without applying sufficient force to substantially deform the surface of the sample 5 while recording the output from the various sensors 3a and/or 7b. Such a pre-scan can be useful since it can be very difficult to ensure that the upper face of the sample is in the XY plane to nanometre precision, and hence a tolerance of for instance ±10µm per mm of scratch length (i.e. 1 %) of slope along the predetermined track 6 is acceptable. An accurate determination of penetration depth Pd of the tip into the sample 5, taking into account surface slope and irregularities, can thus be carried out, and a residual depth profile can equally be accurately measured. As a general rule, "perpendicular" and "parallel" should be understood as incorporating a tolerance of 1% as mentioned above.

During the scratch test, various parameters of the scratch may be measured as desired by means of the sensors 3a and/or 7b, namely at least one or more of:
- normal force Fn, i.e. the force with which the tip 9a is pressed into the surface of the sample 5 while tracking along the predetermined track 6;
- tangential force Ft substantially perpendicular to the axis of the stylus 9;
- acoustic emissions Ae;
- penetration depth Pd of the tip 9a into the sample 5.

From these parameters, the coefficient of friction µ can also be calculated if desired.

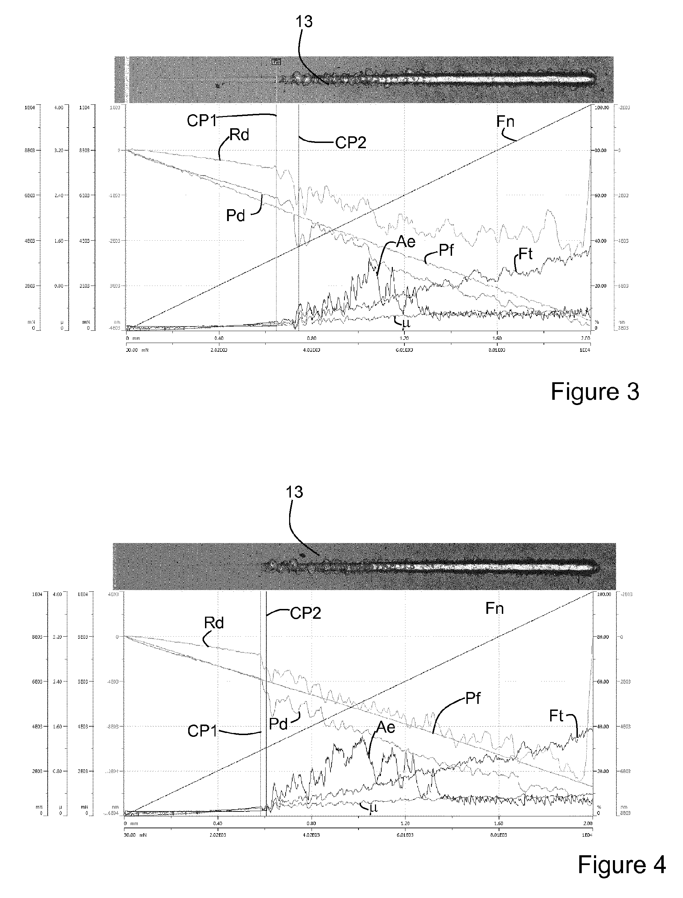

Graphs of these parameters for various samples are illustrated in figures 3, 4 and 5, and these will be discussed in more detail below.

It should be noted that normal force Fn may be predetermined, as is typical (in which case penetration depth Pd is a dependent variable), or may be dependent upon a predetermined penetration depth Pd (in which case normal force Fn is a dependent variable). This latter is commonly referred to as a "depth-controlled scratch".

Optionally, a post-scan may be carried out so as to measure the residual depth Rd of the scratch, again as described in EP 1092142. This post-scan involves passing the tip 9a along at least part of the scratch while applying insufficient force to deform the surface while recording the output from the various sensors 3a and/or 7b.

In step 102, after the scratch has been carried out, a series of magnified images 13 of parts of the scratch are taken by means of the microscope camera 11, and these are stored in the controller 4.

In step 103, the controller then stitches these images 13 together, and synchronises them with the various parameters that have been measured, so that the various parameter values at a given point along the track 6 can be displayed in line with the corresponding part of the stitched-together image of the scratch. This can then, if desired, be displayed to the user in a graphical form, such as illustrated in figures 3-5. It should be noted that the data can be synchronised with the images without necessarily being displayed as such to the operator. For instance, the images can be displayed at a different scale to the data, or can be offset therefrom. "Synchronisation" therefore means simply that there is a correspondence registered between a given point along the scratch and the data corresponding to that point, whether or not the visual output displays this directly to the operator, with each point of the image being directly in line with the corresponding data.

In step 104, critical failure points of the surface of the substrate are determined by automatic image recognition carried out on said images 13.

One way in which this can be carried out will be explained in detail below.

Controller 4 comprises a previously-trained neural network, typically implemented in software as a computer program product, adapted to identify critical failure points based on the images 13.

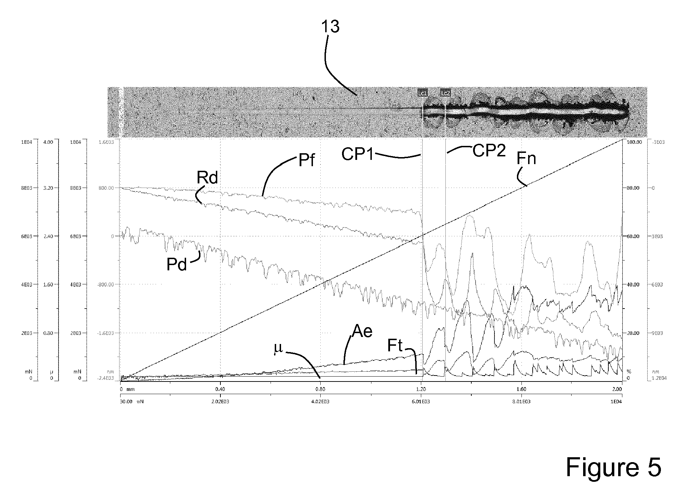

Since each particular material of the sample, and each particular type of coating, has a characteristic fracture mode, it is advantageous to train the neural network specifically for each sample type, and then to specify this to the system. This makes the neural network faster and more accurate, since it limits the number of failure modes that potentially have to be detected. As an illustration of this point, figures 3 and 4 illustrate scratch tests carried out on samples comprising a 50µm Diamond-Like Carbon (DLC) coating on a steel substrate, and figure 5 illustrates the same test carried out on a sample comprising a 50µm TiNbN coating on a steel substrate. It is clear to the naked eye that the failure modes of the two DLC samples are very similar, and are quite different to that of the TiNbN coating. These figures illustrate graphs of the parameters measured during the scratch, as mentioned above.

The neural network can be trained as follows, however other training methods are also possible.

For each class of material, a reference data set is built, containing a large number of measurements (typically more than 100). This data set would typically comprise sets of images 13 of scratches and the corresponding measurement data (one or more of acoustic emissions Ae, tangential force Ft, penetration depth Pd, normal force Fn, residual depth Rd) and indications of failure points CP1, CP2 (see figures 3-5), as detected by a skilled technician. The corresponding images 13 may be taken with a focus following the original surface profile and/or following the residual depth profile of the scratch. Using images 13 at a so-called multifocus in which the point of focus follows the residual depth profile. This produces the best results since it provides the most useful image data, however a focus based on following the original surface profile can possibly also be used.

Subsequently, the data set can be filtered if desired, e.g. by removing noise, and e.g. by carrying out edge detection (such as Canny edge detection) on the brightness signal of the various images 13 (ideally based both on both focus at the original surface profile but also based on the aforementioned multifocus). Other filtering methods can of course also be used, if desired.

Then, the data set can be normalised if desired by normalising the images 13 so as to have similar luminance, and to normalise the measured parameters, e.g. in respect of Ft/Fn_{Max}, Fn/Fn_{Max}, Ae/Ae_{Max}, Pd/Pd_{Max}, Rd/Rd_{Max}, in which the suffix "Max" indicates the maximum recorded value of the parameter indicated. Other normalisations can of course be applied, if desired.

This dataset can then be used to train a Convolutional Neural Network (or similar type of learning system) with the dataset, the input being a matrix comprised of the normalised images and normalised parameters, the output being a vector related to the critical failure points. This can be carried out by any convenient known method, for instance by means of the software downloadable from http://deeplearning.net/software/theano/ or https://github.com/Lasagne/Lasagne.

The system thus trained will thus automatically detect the critical failure points CP1 and CP2 as illustrated in figures 3-5.

In order to improve the accuracy of detection of the critical failure points, they may be identified by the above-mentioned image recognition in combination with other measured parameters. This permits a multidimensional analysis capable of greater detection precision.

Furthermore, if desired, one or more of the scratch parameters can be considered in the conventional manner, so as to cause the system to "hone in" on likely critical failure points based on parameters such as Fn, Ft, µ, Rd, Ae, or functions thereof such as the first differential of one or more of these parameters, or a projected value based on a projected trend. When one or more of these parameters or functions thereof departs from an expected threshold value by more than a certain amount, this can indicate the presence of a critical failure point, and the images 13 can be analysed within a window corresponding to a predetermined distance either side of the point at which the value is exceeded. This can be used to reduce the amount of processing required.

Other automatic image recognition methods can also be applied, such as fuzzy logic, other types of neural networks, and so on.

Although the invention has been described in terms of specific embodiments, these are not to be construed as limiting the scope of the invention, as variations thereto can be envisaged without departing from the invention as defined in the appended claims.

## Claims

1. Method of evaluating a performance of a surface of a material, the method comprising steps of:
- carrying out a scratch test on a surface of a sample (5) by means of a stylus (9) so as to form a scratch along a predetermined track (6), and measuring at least one parameter (Fn, Ft, Pd, Ae, Rd) relating to said scratch;
- subsequently, acquiring and storing a series of images (13) of at least a part of said scratch, each of said images (13) corresponding to a magnified part of said scratch;
- subsequently, synchronising said images (13) with the measurements of said at least one parameter (Fn, Ft, Pd, Ae, Rd) in function of displacement of said stylus (9) along said predetermined track (6);
**characterised by**
- determining a failure point (CP1; CP2) of the surface of the sample (5) based on automatic image recognition carried out on said images (13).

2. Method according to claim 1, wherein said at least one parameter comprises normal force (Fn) applied by the stylus to the sample (5).

3. Method according to claim 2, wherein said at least one parameter further comprises at least one of:
- acoustic emissions (Ae);
- penetration depth (Pd) of the stylus into the surface of the sample;
- tangential force (Fn) between the surface of the sample and the stylus;
- residual depth (Rd) of said scratch.

4. Method according to any preceding claim, wherein said step of determining a failure point is carried out by means of a neural network.

5. Method according to claim 4, wherein said neural network has been previously trained to detect failure points (CP1; CP2) based on inputting a plurality of datasets incorporating image data, corresponding parameter data, and manually identified failure points.

6. Method according to any preceding claim, wherein said failure point (CP1; CP2) is determined in combination with said at least one parameter (Fn, Ft, Pd, Ae, Rd).

7. Method according to claim 6, wherein said failure point (CP1; CP2) is determined when said at least one parameter (Fn, Ft, Pd, Ae, Rd), or a function thereof, deviates from an expected magnitude value by at least a predetermined amount.

8. Scratch test apparatus (1) adapted to carry out the method of any of claims 1-7.

9. Scratch test apparatus (1) according to claim 8, comprising a headstock (7) and a sample holder (3) displaceable one with respect to the other, a stylus (9) supported by the headstock and comprising a tip (9a) arranged to be brought into contact with a surface of a sample (5) supported on the sample holder (3), at least one sensor (3a; 7b) for recording at least one parameter (Fn, Ft, Pd, Ae, Rd) of a scratch test, and a controller (4) adapted to control said scratch test apparatus (1).

10. Computer program product directly loadable into the internal memory of a digital computer comprising software code portions for causing a scratch testing apparatus (1) to perform the steps of any of claims claim 1-7 when said product is run on a computer (4) controlling said scratch test apparatus (1).
